# EUROPÄISCHE PATENTSCHRIFT

(11) **EP 0 844 958 B1**
(45) Veröffentlichungstag und Bekanntmachung des Hinweises auf die Patenterteilung: **16.08.2000**
(21) Anmeldenummer: 97922851.7
(22) Anmeldetag: 18.04.1997
(51) Int. Cl.: B61H 7/08

(54) **AUFHÄNGUNG EINER WIRBELSTROMBREMSE AN EINEM DREHGESTELL EINES SCHIENENFAHRZEUGES**
SYSTEM FOR SUSPENDING AN EDDY-CURRENT BRAKE ON A RAIL VEHICLE BOGIE
SYSTEME DE SUSPENSION D'UN FREIN A COURANTS DE FOUCAULT SUR UN BOGIE DE VEHICULE SUR RAILS

(30) Priorität: 15.05.1996 DE 19619578
(43) Veröffentlichungstag der Anmeldung: 03.06.1998
(73) Patentinhaber: KNORR-BREMSE Systeme für Schienenfahrzeuge GmbH, 80809 München (DE)
(72) Erfinder: KERSCHER, Albert, D-85386 Eching (DE); ELSTORPFF, Marc, D-80637 München (DE); GRAF, Thomas, D-86633 Neuburg (DE)
(86) Internationale Anmeldenummer: DE9700782
(87) Internationale Veröffentlichungsnummer: WO9743160

(56) Entgegenhaltungen:
- DE-A- 2 614 298
- FR-A- 2 159 772
- FR-A- 2 280 536

## Beschreibung

Die Erfindung betrifft eine Wirbelstrombremse nach dem Gattungsbegriff des Patentanspruches 1.

Bei Wirbelstrombremsen der gattungsgemäßen Art (DE-OS 26 14 298) ist an den beidseitigen Rahmenlängsträgern eines Drehgestells jeweils eine durch Betätigungszylinder gebildete Hebeeinrichtung für die unterhalb der Rahmenlängsträger befindlichen Bremsträger zwischen Achslagern einer Seite des Schienenfahrzeuges vorgesehen. Die an der Unterseite der Bremsträger befindlichen Bremsmagnete werden mit Hilfe der Bremsträger bzw. der Hebeeinrichtung zwischen abgesenkter Bremsstellung unter geringem und möglichst konstantem Abstand zur Oberfläche der Schiene und gelöster, angehobener Stellung verlagert. Die stirnseitigen Enden der parallel zu den Schienen sich erstreckenden Bremsträger sind als Gleitstücke ausgebildet und in mit den Rad- bzw. Achslagern starr verbundenen, gehäuseartigen Führungen höhenverlagerbar angeordnet; in abgesenkter Bremsstellung sind die Gleitstücke jeweils bündig in einem engen Führungsprofil gehaltert. Wegen der Relativbewegung zwischen Achslager und Wirbelstrombremse ergibt sich hierbei großer Verschleiß der Gleitstücke; dieser Verschleiß wird noch verstärkt durch ein unweigerlich auftretendes Kantentragen der Gleitstücke auf ihren Lagern, hervorgerufen z.B. durch Achsverschränkung, Toleranzen etc. Bei einer als verschleißfrei zu geltenden Bremse ist dieser Nachteil gravierend. Zudem ist die Einstellung des Luftspaltes und die Nachjustierung der Bremse infolge des Radreifenverschleißes zu aufwendig, da die Widerlager für die Gleitstücke mittels einzulegender Zwischenlagen zur Feineinstellung zu versehen sind.

Davon ausgehend besteht die Aufgabe der Erfindung darin, eine Wirbelstrombremse der gattungsgemäßen Art so auszugestalten, daß eine Gleitbewegung zwischen dem Auflager und dem stirnseitigen Ende der Arme weitgehend vermieden bzw. auf ein Mindestmaß reduziert wird; es soll eine Minimalisierung des Verschleißes zwischen diesen Teilen erreicht werden, auch sollen die Radsätze weitgehend unbeeinflußt bleiben, d.h. sie sollen sich insbesondere parallel zur Schiene frei einstellen können. Gleichzeitig soll mit vereinfachten baulichen Mitteln eine leichtere Nachjustierung des Luftspaltes zum Zwecke des Ausgleiches des Radreifenverschleißes erreicht werden können.

Zur Lösung dieser Aufgabe dienen die Merkmale nach dem Kennzeichnungsteil des Patentanspruches 1.

Durch Verwendung der am freien Ende der Arme befindlichen Rollen bzw. Gleitsteine und der diesen angepaßten Auflagern im achslagerseitigen Gehäuse ist ein weitgehend verschleißfreies Führen des Bremsträgers in abgesenkter Bremsstellung desselben ermöglicht. Bei Verwendung von Rollen ist die Gleitbewegung bei Auflage am gehäuseseitigen Auflager auf ein Mindestmaß reduzierbar. Relativbewegungen parallel zur Schiene zwischen der Bremse und dem Achslager werden durch das Abrollen der Rolle auf dem plattenförmigen Auflager im wesentlichen reibungsfrei ermöglicht. Seitlich wird die Bremse über Führungen geführt, welche innenseitig am mit dem Achslager verbundenen Gehäuse angebracht sind.

Auch bei Verwendung des Gleitsteins sind Relativbewegungen parallel zur Schiene, d.h. Bewegungen zwischen Bremse und Achslager in der gehäuseseitigen Führung ermöglicht, da der Gleitstein reibungsarm in seiner entsprechend konfigurierten Führung gleitet. Bei einem Verschränken der Achse des Drehgestells kann sich der Gleitstein um eine Achse parallel zur Schiene in seiner profilierten Führung des Auflagers frei einstellen, folglich wird das sogenannte Kantentragen vermieden und es wird der Verschleiß minimiert. Auch senkrecht zur Schienenlängsrichtung ist eine Führung mittels der Gleitsteine gegeben, da der Gleitstein und das am Auflager aus gebildete Führungsprofil im wesentlichen komplementär, d.h. ohne Möglichkeit gegenseitiger Verkantung, ausgebildet sind und ausreichende Führungstiefe besitzen.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Figur 1 ist eine Teilschnittansicht eines Endes des Bremsträgers mit einem von diesem in ein achslagerfestes Gehäuse sich erstreckenden Arm in angehobener Bremslösestellung desselben;
Figur 2 ist eine schematische Schnittansicht des mit dem Achslager verbundenen Gehäuses und des darin mittels einer Rolle geführten Armendes in abgesenkter Bremsstellung;
Figur 3 ist eine der Ansicht nach Figur 1 vergleichbare, stark vereinfachte Seiten- und Schnittansicht einer zweiten Ausführungsform der Erfindung, unter Verwendung eines am Armende befindlichen Gleitsteins in abgesenkter Bremsstellung;
Figur 4 ist eine Schnittansicht von Linie IV-IV in Figur 3; und
Figur 5 ist eine Teilschnittansicht einer im Inneren des Bremsträgers angeordneten Nachstelleinrichtung zur Veränderung des Lagewinkels des Armes.

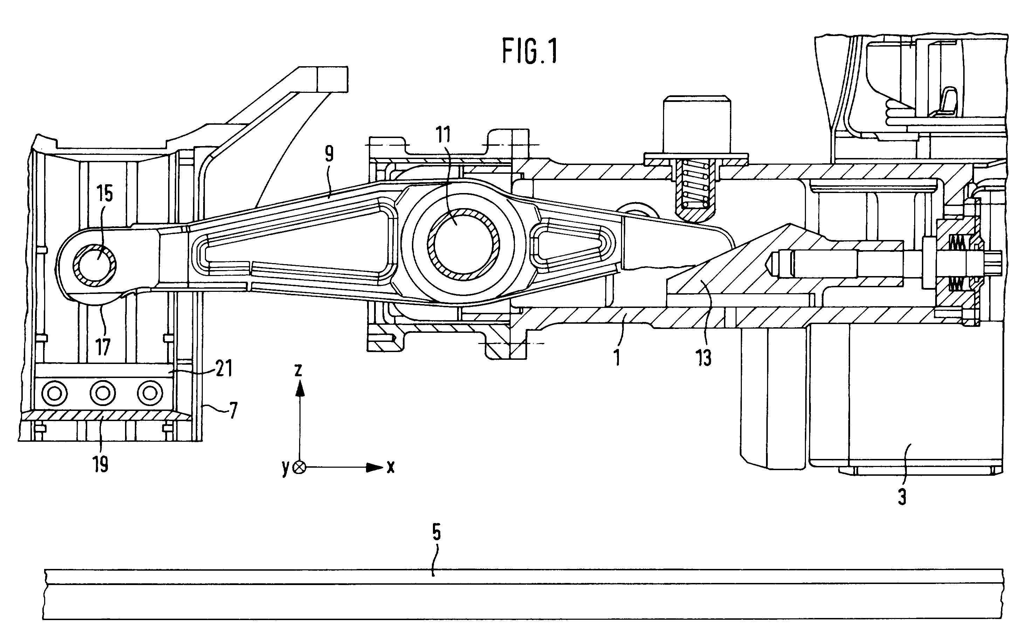

In Figur 1 der Zeichnung ist in Teilschnittansicht ein Bremsträger 1 einer Wirbelstrombremse dargestellt, welcher mit Hilfe von Hebebälgen oder dgl. Hebeeinrichtungen an einem (nicht dargestellten) Rahmenlängsträger eines Drehgestellrahmens zwischen Lösestellung und Bremsstellung vertikal verlagerbar ist. An der Unterseite der beidseitigen Bremsträger der Wirbelstrombremse befinden sich in Figur 1 schematisch angedeutete Bremsmagnete 3, welche in Bremsstellung unter einem vorbestimmten Abstand mit konstantem Luftspalt zur schematisch wiedergegebenen Schiene 5 zu halten sind, so z.B. unter einem Abstand von 7mm. In Lösestellung werden die Bremsmagnete 3 mittels der (nicht dargestellten) Hebeeinrichtungen in eine Hochlage (Figur 1) an den Drehgestellrahmen angehoben.

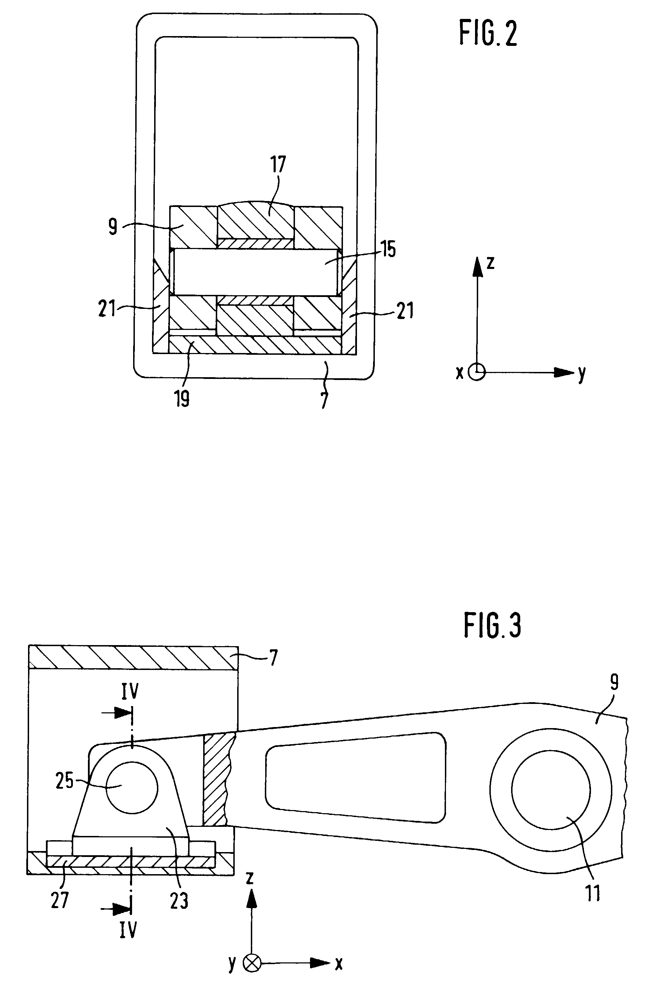

Die Achslager des Schienenfahrzeuges tragen nach unten gerichtete Gehäuse 7, in welchen jeweils ein im Bremsträger 1 gehalterter Arm 9 höhenverlagerbar geführt ist. Der Arm 9 ist innerhalb des Bremsträgers 1 um eine Achse 11 schwenkbar; am gemäß Figur 1 rechtsseitigen Ende stützt sich der Arm 9 an einem nachfolgend erläuterten Auflagekeil 13 ab und ist am gemäß Figur 1 linken Ende mit einer auf einem Bolzen 15 drehbar gelagerten Rolle 17 versehen. Gemäß Schnittansicht nach Figur 2 ist die Rolle 17 in einer Gabel des Arms 9 gelagert, wobei der Bolzen 15 die beiden Gabelhälften durchsetzt. In der abgesenkten Bremsstellung stützt sich die Bremse über den Bremsträger, die beidseitigen Arme und die Rollen 17 je auf einem Auflager 19 der Gehäuse 7 der (nicht dargestellten) Achslager ab. Relativbewegungen in X-Richtung zwischen der Wirbelstrombremse und dem Achslager werden durch ein Abrollen der Rolle 17 auf dem als Platte ausgebildeten Auflager 19 im wesentlichen reibungsfrei ermöglicht. In Y-Richtung wird der Arm bzw. das die Rolle tragende Gabelende durch seitliche Führungen 21 geführt; diese Führungen sind vorzugsweise aus einem reibarmen Material gefertigt. Die Lagerung der Rolle am Ende des Arms 9 ist nicht auf die beispielhaft wiedergegebene gegabelte Ausführungsform beschränkt; auch die Lagerung der Rolle auf dem Bolzen 15 kann in unterschiedlicher Weise, so z.B. auch mit Wälzlagerelementen, erfolgen. Gemäß Figur 2 ist die Rolle 17 am Außenumfang ballig ausgebildet, um ein Verkanten gegenüber dem Auflager 19 zu verhindern.

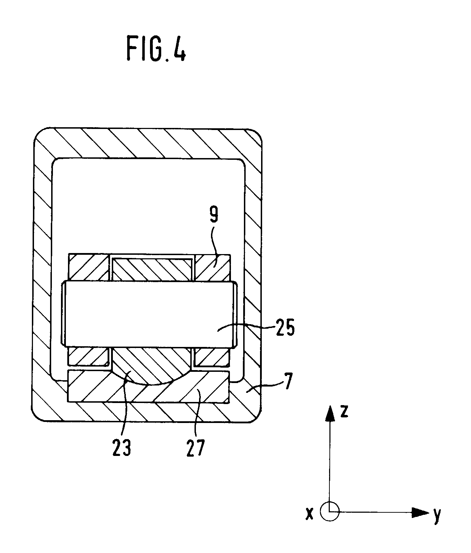

In Figur 3 und 4 ist eine weitere Ausführungsform der Aufhängung gemäß der Erfindung wiedergegeben. Nach Figur 3 ist am linksseitigen Armende, also innerhalb des Gehäuses 7 des Achslagers, ein Gleitstein 23 vorgesehen, welcher auf einem dem Bolzen 15 vergleichbaren Bolzen 25 gelagert ist. Der Bolzen 25 erstreckt sich im dargestellten Ausführungsbeispiel durch die beiden Gabelhälften einer das Ende des Arms bildenden Gabel. In Bremsstellung stützt sich der am Ende des Arms 9 befindliche Gleitstein 23 auf einem der Formgebung des Gleitsteins angepaßten Auflager 27 ab. Das Auflager 27 ist im Ausführungsbeispiel nach Figur 4 teilzylinderförmig ausgeschnitten und endet an den Stirnseiten (Figur 3) frei. Relativbewegungen zwischen der Wirbelstrombremse und dem Achslager in X-Richtung werden durch ein Gleiten des Gleitsteins in der durch das Auflager gebildeten Führung ermöglicht; bei einem Verschränken der Achsen des Drehgestells kann sich der Gleitstein um die X-Achse im Auflager 27 frei einstellen, da die Führungsfläche, wie angegeben, teilzylinderförmig geformt ist. Bei einem Verdrehen der Achslager des Schienenfahrzeuges um die Y-Achse d.h. beim Einfedern, stellt sich der Gleitstein um den Bolzen 25 schwenkbar frei ein, somit wird in allen auftretenden Betriebszuständen eine flächige Auflage gewährleistet und somit Kantentragen vermieden und Verschleiß des Auflagers minimiert. In Y-Richtung wird die Wirbelstrombremse in einer der Abstützung durch die Führungen 21 nach Figur 1 vergleichbaren Weise durch die Kontur des Auflagers 27 geführt.

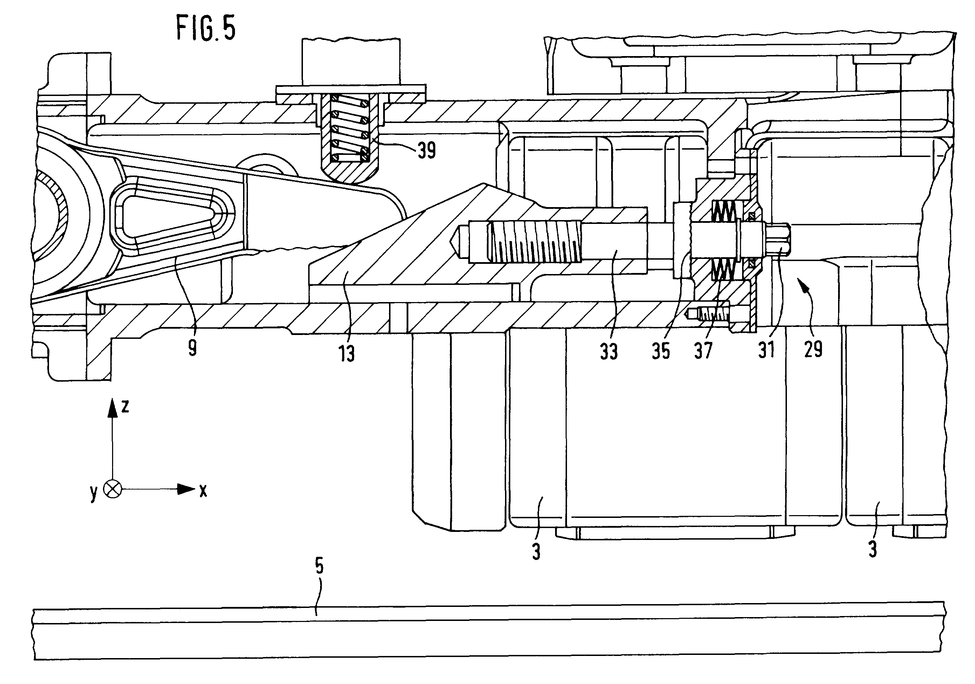

Die unter Bezugnahme auf die Figuren 1-4 erläuterten Ausführungsformen der Aufhängung der Wirbelstrombremse unter Führung durch vom Bremsträger sich erstreckende Arme erweisen sich als besonders vorteilhaft zum Nachjustieren des Luftspaltes zwischen den Bremsmagneten 3 und der Schiene 5 bzw. zum Ausgleichen des Radreifenverschleißes des Schienenfahrzeuges. Gemäß Figur 1 und 5 ist das im Inneren des Bremsträgers 1 geführte Ende des um die Achse 11 schwenkbaren Arms 9 auf einem Widerlager in Form eines Auflagekeils 13 abgestützt. Durch Positionsveränderung d.h. Verschiebung des Auflagekeils in X-Richtung, ist eine Veränderung der Winkellage des Arms 9 erzielbar. Die Veränderung der Höhenlage des die Rolle 17 bzw. den Gleitstein 23 tragenden Armendes kann auch oder zusätzlich durch Maßnahmen an der Rolle bzw. am Gleitstein erfolgen d.h. es kann eine Rolle 17 größeren Durchmessers verwendet werden bzw. ein Gleitstein 23 mit gegenüber dem Auflager 27 größerem Höhenmaß, derart, daß der erwünschte Ausgleich erzielt wird.

Der in Figur 1 und 5 dargestellte Auflagekeil 13 bildet zusammen mit einer Stelleinrichtung 29 einen Nachsteller, welcher in X-Richtung wirkt und über die Keilfläche des Auflagekeils auf das Ende des Arms 9 einwirkt. Die Stelleinrichtung 29 besteht aus einer mit dem Auflagekeil 13 verschraubten, axial unverschieblich gehaltenen und an ihrem entgegengesetzten Ende einen Mehrkant 31 tragenden Spindel 33, welche bei durch am Mehrkant 31 vollzogener Drehung eine Axialverschiebung des Auflagekeil in X-Richtung hervorruft, derart, daß die Winkelverstellung des Arms in vorstehend genannter Weise erfolgt. Der Auflagepunkt A des Arms am Auflagekeil wandert folglich nach oben oder nach unten, so daß bei gleichzeitiger Veränderung der Neigung des Arms die Höhe der Bremsmagnete 3 über der Schiene einstellbar ist, bzw. Radreifenverschleiß ausgeglichen werden kann. Die Spindel 33 wird vorzugsweise über eine durch ein Tellerfederpaket 37 vorgespannte Verzahnung 35 drehgesichert

Das in Figur 1 und 5 dargestellte Federelement 39 verhindert in angehobener Lage der Bremsmagnete ein Klappern des Arms, da die Schwenkbewegung desselben federelastisch abgefangen ist.

### Bezugszeichenliste

- 1: Bremsträger
- 3: Bremsmagnet
- 5: Schiene
- 7: Gehäuse
- 9: Arm
- 11: Achse
- 13: Auflagekeil
- 15: Bolzen
- 17: Rolle
- 19: Auflager
- 21: Führung
- 23: Gleitstein
- 25: Bolzen
- 27: Auflager
- 29: Stelleinrichtung
- 31: Mehrkant
- 33: Spindel
- 35: Verzahnung
- 37: Tellerfederpaket
- 39: Federelement

## Patentansprüche

1. Wirbelstrombremse für Schienenfahrzeuge, mit von Bremsträgern (1) getragenen Bremsmagneten (3), und mit einer Aufhängung an einem Drehgestell eines Schienenfahrzeuges, wobei sich zu beiden Längsseiten des Drehgestells Rahmenlängsträger von diesem erstrecken, sowie mit Hebeeinrichtungen, die an diesen Längsträgern wirken und die Bremsträger (1) zwischen abgesenkter Bremsstellung und angehobener Lösungsstellung verlagern, wobei die Bremsträger (1) an ihren stirnseitigen Enden in an den Achslagern jeweils zweier Radsätze angeordneten Gehäuse (7) geführt werden, **dadurch gekennzeichnet,** daß die in dem Gehäuse (7) geführten stirnseitigen Enden der Bremsträger als Stützelemente ausgebildet sind, welche Mittel zum Zwecke der Verschleißminimierung in Bremsstellung aufweisen.

2. Wirbelstrombremse nach Anspruch 1, **dadurch gekennzeichnet,** daß an den in die Gehäuse (7) sich erstreckenden stirnseitigen Enden jeweils eine auf einem Bolzen (15) gelagerte Rolle (17) vorgesehen ist, und daß der Boden des Gehäuses (7) aus einem im wesentlichen plattenförmigen Auflager (19) für die Rolle besteht.

3. Wirbelstrombremse nach Anspruch 1 oder 2, **gekennzeichnet durch** an der Innenseite des Gehäuses (7) sich erstreckende Führungen (21) zur Abstützung der Seiten des stirnseitigen Endes des Bremsträgers in abgesenkter Bremsstellung desselben.

4. Wirbelstrombremse nach Anspruch 1, **dadurch gekennzeichnet,** daß an den in die Gehäuse (7) sich erstreckenden stirnseitigen Enden jeweils mittels eines Bolzens (25) ein Gleitstein (23) schwenkbar angelenkt ist, und daß der Boden des Gehäuses (7) aus einem mit einer Längsführung für den Gleitstein (23) versehenen Auflager (27) besteht.

5. Wirbelstrombremse nach Anspruch 1 oder 4, **dadurch gekennzeichnet,** daß das Auflager (27) eine im Schnitt im wesentlichen teilkreisförmige, der Kontur des Gleitsteines (23) angepaßte Formgebung aufweist, derart, daß der Gleitstein (23) in abgesenkter Bremsstellung begrenzt relativ zum Auflager schwenkbar ist.

6. Wirbelstrombremse nach einem der vorangehenden Ansprüche, **dadurch gekennzeichnet,** daß die stirnseitigen Enden der Bremsträger (1) aus an diesen gehalterten Armen (9) gebildet sind.

7. Wirbelstrombremse nach Anspruch 6, **dadurch gekennzeichnet,** daß die von beiden Stirnenden des Bremsträgers (1) sich erstreckenden Arme (9) zum Zwecke der Nachstellung des Radreifenverschleißes bzw. zur Einstellung des Luftspaltes begrenzt schwenkbar am Bremsträger (1) angeordnet sind.

8. Wirbelstrombremse nach Anspruch 7, **gekennzeichnet durch** folgende Merkmale:
a) jeder Arm (9) ist zwischen seinen Enden am Bremsträger (1) jeweils auf einer Achse (11) gelagert;
b) das in das Innere des Bremsträgers sich erstreckende Ende des Armes liegt auf der Keilfläche eines Auflagekeils (13) auf; und
c) der Auflagekeil (13) ist auf einer in Axialrichtung des Bremsträgers unbeweglichen Spindel (33) angeordnet und durch Drehung derselben in Längsrichtung verschiebbar.

9. Wirbelstrombremse nach Anspruch 8, **dadurch gekennzeichnet,** daß das in den Bremsträger sich erstreckende Ende des Armes zwischen der Keilfläche des Auflagekeils und einem an der entgegengesetzten Seite einwirkenden Federelement (39) gefangen ist.

## Claims

1. Eddy-current brake for rail vehicles, having brake magnets (3) carried by brake carriers (1), and having a suspension system on a rail vehicle bogie, wherein longitudinal frame carriers extend from the bogie on both its longitudinal sides, and having lifting devices which act on these longitudinal carriers, and move the brake carriers (1) between the lowered braking position and the raised release position, the brake carriers (1) being guided at their front ends in housings (7) arranged on the axle bearings respectively of two sets of wheels, characterised in that the front ends of the brake carriers guided in the housing (7) are constructed as support elements which have means for reducing wear in the braking position.

2. Eddy-current brake according to claim 1,
characterised in that a roller (17) respectively mounted on a pin (15) is provided on the front ends extending into the housing (7), and in that the floor of the housing (7) comprises a substantially plate-shaped support (19) for the roller.

3. Eddy-current brake according to claim 1 or 2,
characterised by guideways (21) extending on the inside of the housing (7) to support the sides of the front ends of the brake carrier in its lowered braking position.

4. Eddy-current brake according to claim 1,
characterised in that a slide ring (23) is hinged respectively by means of a pin (25) pivotably on the front ends extending into the housing (7), and in that the base of the housing (7) comprises a support (27) provided with a longitudinal guideway for the slide ring (23).

5. Eddy-current brake according to claim 1 or 4,
characterised in that the support (27) has a profile which is substantially arcuate in section and is adapted to the contour of the slide ring (23), so that in the lowered braking position the slide ring (23) is pivotable to a limited degree relatively to the support.

6. Eddy-current brake according to one of the preceding claims, characterised in that the front ends of the brake carriers (1) are formed from arms (9) supported on them.

7. Eddy-current brake according to claim 6, characterised in that the arms (9) extending from both front ends of the brake carrier (1) are arranged to be pivotable to a limited degree on the brake carrier (1) for adjusting wheel tyre wear or for setting the air gap.

8. Eddy-current brake according to claim 7, characterised by the following features:
a) each arm (9) respectively is mounted between its ends on an axle (11) on the brake carrier (1) ;
b) the end of the arm extending into the brake carrier rests on the wedge surface of a supporting wedge (13), and
c) the supporting wedge (13) is arranged on a spindle (33) fixed in the axial direction of the brake carrier, and can slide by rotation of the spindle in the longitudinal direction.

9. Eddy-current brake according to claim 8, characterised in that the end of the arm extending into the brake carrier is captive between the wedge surface of the supporting wedge and a spring element (39) acting on the opposite side.

## Revendications

1. Freins à courants de Foucault pour des véhicules à déplacement sur rails, comportant des aimants de freinage (3), portés par des supports de frein (1), et un dispositif de suspension à un bogie d'un véhicule à déplacement sur rails, des longerons de châssis du bogie s'étendant alors des deux côtés longitudinaux de ce dernier, ainsi que des dispositifs élévateurs, qui agissent sur ces longerons et déplacent les supports de frein (1) entre une position abaissée de freinage et une position relevée de relâchement, les supports de frein (1) étant guidés, à leurs extrémités frontales, dans des boîtiers (7) situés sur les boîtes d'essieu de deux essieux montés respectifs, caractérisé en ce que les extrémités frontales, guidées dans le boîtier (7), des supports de frein sont réalisées sous forme d'éléments d'appui, qui comportent des moyens ayant pour but de minimiser l'usure dans la position de freinage.

2. Frein à courants de Foucault selon la revendication 1, caractérisé en ce que sur chacune des extrémités frontales s'étendant dans les boîtiers (7), il est prévu un galet (17) monté sur un tourillon (15), et en ce que le fond du boîtier (7) est constitué par un appui (19), sensiblement en forme de plaque, pour le galet.

3. Frein à courants de Foucault selon la revendication 1 ou 2, caractérisé par des guides (21) s'étendant sur la face intérieure du boîtier (7) pour soutenir les côtés de l'extrémité frontale du support de frein, dans la position abaissée de freinage de ce dernier.

4. Frein à courants de Foucault selon la revendication 1, caractérisé en ce qu'à chacune des extrémités frontales s'étendant dans les boîtiers (7), un coulisseau (23) est articulé, avec une liberté de pivotement, au moyen d'un tourillon (25), et en ce que le fond du boîtier (7) est constitué par un appui (27) pourvu d'un guide longitudinal pour le coulisseau (23).

5. Frein à courants de Foucault selon la revendication 1 ou 4, caractérisé en ce que l'appui (27) présente une configuration en coupe sensiblement en forme de secteur de cercle, adaptée au contour du coulisseau (23), de telle sorte que le coulisseau (23) puisse, dans la position abaissée de freinage, pivoter, sur une plage limitée, par rapport à l'appui.

6. Frein à courants de Foucault selon l'une des revendications précédentes, caractérisé en ce que les extrémités frontales des supports de frein (1) sont constituées par des bras (9) supportés sur ces derniers.

7. Frein à courants de Foucault selon la revendication 6, caractérisé en ce que les bras (9), qui s'étendent depuis les deux extrémités du support de frein (1), sont disposés avec une possibilité de pivotement limité sur le support de frein (1), en vue du rattrapage de l'usure du bandage de roue ou pour le réglage de l'entrefer.

8. Frein à courants de Foucault selon la revendication 7, caractérisé par les caractéristiques suivantes:
a) chaque bras (9) est, entre ses extrémités, monté sur le support de frein (1), sur un axe respectif (11);
b) l'extrémité du bras, qui s'étend à l'intérieur du support de frein, repose sur la surface inclinée d'un coin d'appui (13); et
c) le coin d'appui (13) est disposé sur une broche filetée (33), immobilisée dans la direction axiale du support de frein, et est déplaçable en direction longitudinale par rotation de cette broche filetée.

9. Frein à courants de Foucault selon la revendication 8, caractérisé en ce que l'extrémité du bras, qui s'étend dans le support de frein, est prise entre la surface inclinée du coin d'appui et un organe élastique (39) agissant de l'autre côté.
